# EUROPEAN PATENT SPECIFICATION

(11) **EP 2 166 617 B1**
(45) Date of publication and mention of the grant of the patent: **30.09.2015**
(21) Application number: 08777758.7
(22) Date of filing: 02.07.2008
(51) Int. Cl.: H01Q 7/00, G06K 19/07, G06K 19/077, H01Q 9/40, H01Q 23/00, H04B 5/02

(54) **WIRELESS IC DEVICE**
DRAHTLOSE IC-VORRICHTUNG
DISPOSITIF À CIRCUIT INTÉGRÉ SANS FIL

(30) Priority: 09.07.2007 JP 2007179332; 10.10.2007 JP 2007264603; 14.04.2008 JP 2008105189
(43) Date of publication of application: 24.03.2010
(73) Proprietor: Murata Manufacturing Co. Ltd., Nagaokakyo-shi, Kyoto 617-8555 (JP)
(72) Inventor: KATO, Noboru, Nagaokakyo-shi Kyoto 617-8555 (JP); IKEMOTO, Nobuo, Nagaokakyo-shi Kyoto 617-8555 (JP)
(74) Representative: Zimmermann, Tankred Klaus
(86) International application number: PCT/JP2008/061955
(87) International publication number: WO 2009/008296

(56) References cited:
- EP-A- 1 280 232
- EP-A- 1 357 511
- DE-A1-102006 057 369
- JP-A- 2001 351 084
- JP-A- 2003 046 318
- JP-A- 2003 069 335
- JP-A- 2003 216 919
- JP-A- 2003 249 813
- JP-A- 2004 297 681
- JP-A- 2005 124 061
- US-B1- 6 249 258
- US-B2- 6 812 707
- US-B2- 7 088 249

## Description

### Technical Field

The present invention relates to a wireless IC device for a radio frequency identification (RFID) system which allows noncontact data communication via electromagnetic waves.

### Background Art

In recent years, RFID systems have been used as article management systems. For information transmission, an RFID system allows noncontact communication between a reader/writer that generates an induction field and a wireless IC device that is attached to an article and stores predetermined information.

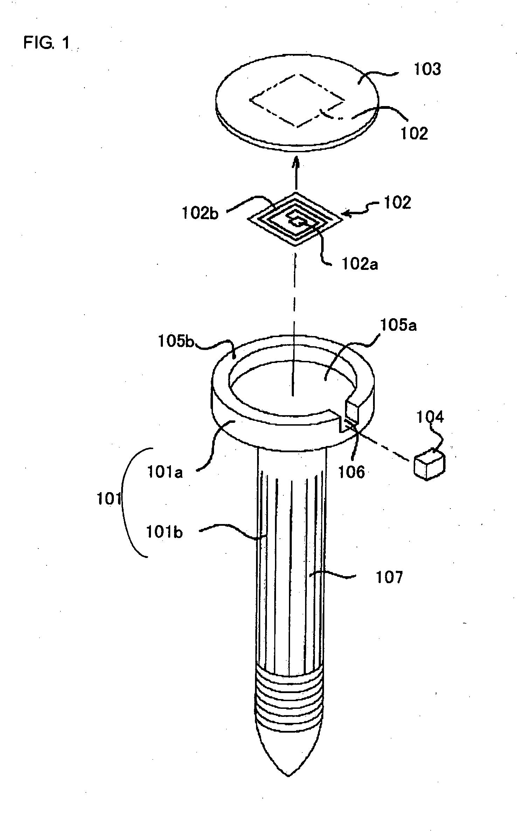

Fig. 1 is an external perspective view illustrating an example of a metal article to which an IC tag label described in Patent Document 1 is attached.

An IC tag label 102 has a rectangular thin film-like shape. The IC tag 102 has an IC chip 102a at the center thereof and a thin-film antenna 102b in an outer region thereof. To accommodate the IC tag 102 in a floating state in a recessed portion 105a formed in a head 101a of a metal article 101, the IC tag 102 is secured to the undersurface of a nonmetal plate 103. The nonmetal plate 103 is fit into the recessed portion 105a and secured. The head 101a has a notch 106.

With the configuration described above, a magnetic field generated by the antenna 102b in the IC tag 102 can be formed into a loop that passes through the notch 106, the exterior of the metal article 101, and the nonmetal plate 103 and returns to the antenna 102b.

A metal article with an IC tag is thus produced.
Patent Document 1: Japanese Unexamined Patent Application Publication No. 2003-6599

However, the IC tag and the metal article provided with the IC tag described in Patent Document 1 have the following problems.
(1) Forming a complex structure, including the recessed portion and the notch, involves a long process and use of additional components. This leads to an increase in cost of manufacturing the metal article.
(2) Producing the nonmetal plate for covering the recessed portion involves preparation of material different from that of the metal article, a long process, and use of additional material. This leads to an increase in cost of manufacturing a metal structure. Additionally, application distortion occurs at a portion where the nonmetal plate is secured to the metal article, due to a difference in thermal expansion coefficient. This may cause cracks or fractures.
(3) Forming an antenna pattern is necessary to allow the IC tag to operate.

US 6,249,258 B1 describes a transponder arrangement in which the transponder is disposed on a conductive surface. According to the invention, the coils forming the transponder antenna are aligned at a slight distance from the metal surface with their main magnetic field direction parallel to this surface.

EP 1 280 232 A1 describes an antenna device including a feed point to which an end of a first conductor is connected, and a plate-shaped second conductor on which the feed point is located and on which another end of the first conductor is grounded. An impedance element is loaded halfway on the first conductor and which varies a first resonant frequency and/or a second resonant frequency.

US 6,812,707 B1 describes a body detecting element including a magnetic member acting as a magnetic core, an antenna coil wound around the magnetic member and a capacitor connected to both the ends of the antenna coil for forming a resonance circuit together with the antenna coil. The antenna coil is mounted on the body integrally therewith through an electromagnetic shield member with the outer peripheral surface thereof confronting the outer surface of the body.

US 7,088,249 B2 describes an installation structure for an RFID tag, which effectively protects the RFID tag from external stress or impact during the storage, transportation and usage, and allows communication with the external.

EP 1,357,511 A2 describes a responder system having a coil for noncontact connection in response to input or output, using an IC tag, which is stably adhered to an objective article such as metal or plastic, which is an insulating material or an induced material. A portion, to which a responder is adhered, is an approximately flat plane or a curved face that is curved inward, and a coil, which has a component in the same direction of the flat plane and a component in a vertical direction to the flat plane, is constituted.

DE 10 2006 057 369 A1 describes a tag having an attachment surface attached to a surface of an object that is to be identified. A radio frequency identification scanning antenna has a conductor loop that is aligned diagonally or perpendicularly to the attachment surface. The loop is arranged on a core made of a fluid reinforcing material or ferrite. A metal layer is arranged between the attachment surface and the coil, where a side having the attachment surface is completely covered by the layer.

### SUMMARY OF THE INVENTION

It is an object of the present invention to solve the problems described above, reduce cost of manufacturing a metal article, and provide a wireless IC device using the metal article as a radiator.

This object is achieved by a wireless device according to claim 1.

### Advantages

Processing steps and components involved in forming, in a metal article, a notch, a recessed portion, a plate, etc., such as those illustrated in Fig. 1, are not necessary. Thus, there is substantially no cost increase associated with addition of the wireless IC device to the article.

Since all or part of the metal article can be used as a radiator, it is possible to improve radiation characteristics.

Use of the electromagnetically coupled module allows design of impedance matching between the wireless IC chip and the radiation electrode within the feed circuit board. This increases the degree of design freedom.

The amount of coupling between the radiation electrode and the loop electrode according to the present invention is largest when the loop electrode is perpendicular to the radiation electrode. However, even if the loop plane of the loop electrode is inclined to the plane of the radiation electrode, the radiation electrode and the loop electrode are coupled to each other while the amount of coupling therebetween is smaller. Thus, it is possible to provide a high degree of flexibility in arranging the loop electrode relative to the radiation electrode.

The loop electrode is coupled to the high-frequency device and electrically directly connected to the radiation electrode, and a part of the radiation electrode serves as the loop electrode, matching between the high-frequency device and the loop electrode is easily achieved. Additionally, since the loop electrode is strongly coupled to the radiation electrode, it is possible to provide high gain.

When a matching circuit is provided between a mounting area for mounting the high-frequency device and the loop electrode, the matching circuit can be used as an inductor for impedance matching between the radiation electrode and the high-frequency device. Thus, flexible and easy design of impedance matching in the wireless IC device is achieved.

Providing a resonant circuit in the feed circuit board improves frequency selectivity and allows an operating frequency of the wireless IC device to be substantially determined by the self-resonant frequency. Accordingly, transmission and reception of energy of signals having a frequency used in the RFID system can be performed with a high degree of efficiency. Thus, radiation characteristics of the wireless IC device can be improved.

Also, by providing a matching circuit in the feed circuit board, transmission and reception of energy of signals having a frequency used in the RFID system can be performed with a high degree of efficiency.

When a resonance frequency of the resonant circuit is made substantially equal to a frequency of a signal transmitted and received by the radiation electrode transmission and reception of energy of signals having a frequency used in the RFID system can be performed with a high degree of efficiency. It is only necessary that the radiation electrode be simply coupled to the feed circuit board and have a size appropriate for necessary gain. The shape and material of the radiation electrode are not limited by the frequency used, and the radiation electrode can be used for any types of articles.

When the high-frequency device or the loop electrode is covered with plastic, the electromagnetically coupled module can be directly attached to a metal article. Thus, the degree of design freedom can be increased.

When the high-frequency device and the loop electrode are molded of plastic on the radiation electrode, the processing steps of covering the electromagnetically coupled module and bonding the electromagnetically coupled module to a metal article can be performed simultaneously. This makes it possible to reduce the number of processing steps and manufacturing cost.

When a metal article formed into a cylindrical shape and having a conductive layer is used as the radiation electrode, the metal article can be used as it is and substantially the entire metal article acts as a radiator. Therefore, even if a plurality of articles are stacked on top of each other, an ID for each article can be read.

When an electrode pattern formed on a circuit board inside electronic equipment is used as the radiation electrode, the circuit board inside the electronic equipment can be used as it is, and mounting of the high-frequency device becomes easy.

When a metal plate provided in a component, such as a liquid crystal display panel, inside electronic equipment is used as the radiation electrode, the component inside the electronic equipment can be used as it is. Thus, it is possible to prevent an increase in size and cost.

When the loop electrode is disposed on the surface opposite the electromagnetic wave transmission/reception surface outside the radiation electrode, that is, on the side opposite the surface on which the high-frequency device is provided, the wireless IC device can be disposed inside an article. Thus, the wireless IC device is protected by the radiation electrode and increases its durability.

### Brief Description of Drawings

[Fig. 1] Fig. 1 illustrates a configuration of a wireless IC device described in Patent Document 1.
[Fig. 2] Fig. 2 illustrates a configuration of a wireless IC device according to a first embodiment of the present invention and an article provided with the wireless IC device.
[Fig. 3] Fig. 3 is an enlarged view of a main part of the wireless IC device illustrated in Fig. 2.
[Fig. 4] Fig. 4 is a schematic view illustrating a distribution of electromagnetic fields near the wireless IC device on the surface of the metal article illustrated in Fig. 2.
[Fig. 5] Fig. 5(A) and Fig. 5(B) each illustrate a configuration of a wireless IC device according to a second embodiment of the present invention.
[Fig. 6] Fig. 6 illustrates a configuration of a wireless IC device according to a third embodiment of the present invention and an article provided with the wireless IC device.
[Fig. 7] Fig. 7 is an enlarged view of a main part of the wireless IC device for the article illustrated in Fig. 6.
[Fig. 8] Fig. 8 illustrates a configuration of a wireless IC device according to a fourth embodiment of the present invention and an article provided with the wireless IC device.
[Fig. 9] Fig. 9 is an enlarged view of a main part of the wireless IC device illustrated in Fig. 8.
[Fig. 10] Fig. 10 illustrates a configuration of a wireless IC device according to a fifth embodiment of the present invention and an article provided with the wireless IC device.
[Fig. 11] Fig. 11 is an enlarged view of a main part of the wireless IC device illustrated in Fig. 10.
[Fig. 12] Fig. 12 illustrates a configuration of a wireless IC device according to a sixth embodiment of the present invention and an article provided with the wireless IC device.
[Fig. 13] Fig. 13 is an enlarged view of a main part of the wireless IC device for the article illustrated in Fig. 12.
[Fig. 14] Fig. 14 is an external perspective view of an electromagnetically coupled module in a wireless IC device.
[Fig. 15] Fig. 15 is an exploded view illustrating an internal configuration of a feed circuit board.
[Fig. 16] Fig. 16 is an equivalent circuit diagram of the feed circuit board.
[Fig. 17] Fig. 17 illustrates a configuration of an electromagnetically coupled module in a wireless IC device according to a seventh embodiment of the present invention.
[Fig. 18] Fig. 18 is a cross-sectional view illustrating a main part of the electromagnetically coupled module illustrated in Fig. 17.
[Fig. 19] Fig. 19 illustrates a configuration of an electromagnetically coupled module in a wireless IC device according to an eighth embodiment of the present invention.
[Fig. 20] Fig. 20 is an exploded perspective view illustrating a feed circuit board in a wireless IC device according to a ninth embodiment of the present invention.
[Fig. 21] Fig. 21 is an equivalent circuit diagram of a main part of the wireless IC device illustrated in Fig. 20.
[Fig. 22] Fig. 22 illustrates a configuration of a wireless IC device according to a tenth embodiment of the present invention and an article provided with the wireless IC device.
[Fig. 23] Fig. 23 is a cross-sectional view illustrating a main part of a circuit board in a notebook personal computer provided with the wireless IC device illustrated in Fig. 22.
[Fig. 24] Fig. 24 is a cross-sectional view illustrating a main part of a wireless IC device according to an eleventh embodiment of the present invention.
[Fig. 25] Fig. 25(A) to Fig. 25(C) are cross-sectional views each illustrating a main part of a wireless IC device according to a twelfth embodiment of the present invention.
[Fig. 26] Fig. 26 is a cross-sectional view illustrating a main part of a wireless IC device according to a thirteenth embodiment (not being part of the claimed invention).
[Fig. 27] Fig. 27 is a cross-sectional view illustrating a main part of a wireless IC device according to a fourteenth embodiment of the present invention.
[Fig. 28] Fig. 28 is a cross-sectional view illustrating a main part of a wireless IC device according to a fifteenth embodiment (not being part of the claimed invention).
[Fig. 29] Fig. 29 is a cross-sectional view illustrating a main part of a wireless IC device according to a sixteenth embodiment of the present invention.

### Reference Numerals

- 1:: electromagnetically coupled module
- 4:: feed circuit board
- 5:: IC chip
- 6:: wireless-IC-device main part
- 7:: loop electrode
- 8:: impedance matching unit
- 9, 9a, 9b:: metal ribbon
- 10:: base
- 11:: matching circuit
- 15:: circuit board
- 16:: electrode pattern
- 17,: 18: electronic component
- 20:: inductor electrode
- 21:: molded plastic
- 25:: capacitor electrode
- 30:: loop electrode
- 35a to 35d:: wireless-IC-chip mounting land
- 40:: feed circuit board
- 41A to 41H:: dielectric layer
- 42a:: via hole
- 45a, 45b:: inductor electrode
- 46, 47:: inductor electrode
- 51:: capacitor electrode
- 53 to 57:: capacitor electrode
- 60 to 64, 70:: metal article
- 65:: insulating sheet
- 66, 67, 68, 69:: wireless-IC-device main part
- 71, 72, 73:: loop electrode segment
- 81 to 86:: metal case
- 87, 88:: metal tray
- 91, 92:: packing
- 93:: hinge
- 94:: protrusion
- 95:: clearance
- 96:: rim
- C1, C2:: capacitor
- L1, L1a, L1b, L2:: inductor
- E:: electric field
- H:: magnetic field

### Best Modes for Carrying Out the Invention

### First Embodiment

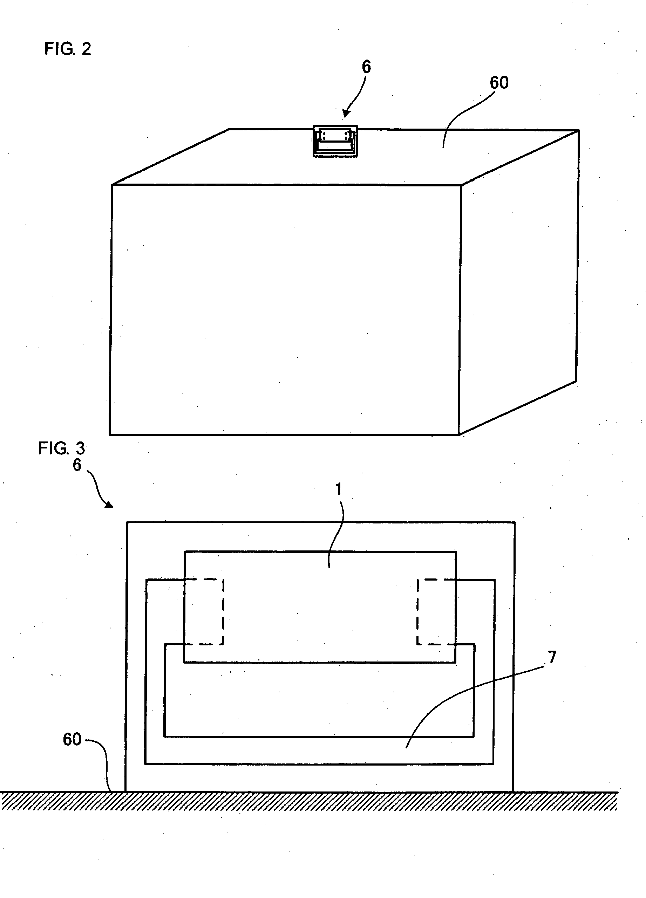

Fig. 2 is an external perspective view illustrating a wireless IC device according to a first embodiment of the present invention and a metal article provided with the wireless IC device. A metal article 60 is an article at least whose surface or near-surface layer is made of metal.

A wireless-IC-device main part 6 is provided on a predetermined surface of the metal article 60. The component indicated by reference numeral 6 is not referred to as wireless IC device. This is because the wireless IC device is constituted not only by the component indicated by reference numeral 6, but also by a part of the metal surface of the metal article 60.

Fig. 3 is an enlarged view of the wireless-IC-device main part. The wireless-IC-device main part 6 has an insulating substrate, which is provided with a loop electrode 7 and an electromagnetically coupled module 1 coupled to the loop electrode 7. The wireless-IC-device main part 6 is placed such that a loop plane of the loop electrode 7 is substantially perpendicular to the metal article 60.

The wireless-IC-device main part 6 having the loop electrode 7 is bonded to the metal article 60 with an insulating adhesive or the like.

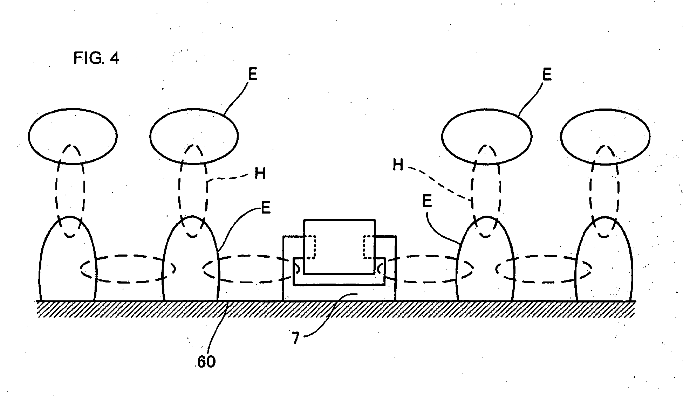

Fig. 4 schematically illustrates an example of a distribution of electromagnetic fields generated on the metal article 60 when the loop electrode 7 acts as an auxiliary radiator for transmission. In the drawing, dashed lines indicate loops of magnetic fields H, while solid lines indicate loops of electric fields E. The loop electrode 7 acts as an auxiliary radiator for magnetic fields, causes the magnetic fields H to be generated parallel to the surface of the metal article 60, and induces the electric fields E in a direction substantially perpendicular to the surface of the metal article 60. Then, electric field loops induce magnetic field loops and thus, this chain of induction events expands the distribution of electromagnetic fields.

In the example described above, the loop electrode 7 acts as an auxiliary radiator for transmission. A high gain is also obtained when the loop electrode 7 acts as an auxiliary radiator for reception.

The electromagnetically coupled module 1 illustrated in Fig. 3 includes a wireless IC chip and a feed circuit board that are described below. The wireless IC chip and the feed circuit board may either be electrically connected to each other or electromagnetically coupled to each other. For electromagnetic coupling, a capacitance is formed of a dielectric thin film or the like between electrodes of the wireless IC chip and the feed circuit board. By allowing the wireless IC chip and the feed circuit board to be coupled through the capacitance, it is possible to protect the wireless IC chip from static damage.

When the feed circuit board is used, the electrode of the feed circuit board is electromagnetically coupled to both ends of the loop electrode 7. Alternatively, the electromagnetically coupled module 1 may be replaced with a single wireless IC chip.

The loop electrode 7 may be of any shape which allows coupling between input and output terminals of the electromagnetically coupled module 1.

Electric fields on a surface of a metal article are perpendicular to the surface of the metal article. Therefore, if the loop plane of the loop electrode 7 is inclined from the position perpendicular to the surface of the metal article 60, the strength of electric fields induced by magnetic fields of the loop electrode 7 is reduced, and thus the antenna gain is reduced. The gain increases as the loop plane of the loop electrode 7 approaches the position perpendicular to the metal article 60. However, even if the loop plane of the loop electrode 7 is inclined relative to the surface of the metal article 60, the metal article 60 still acts as a radiator. Therefore, the loop plane of the loop electrode 7 may be inclined as necessary.

To allow the loop electrode 7 to be positioned substantially perpendicularly to the metal article 60, a recessed portion for accommodating an end of the feed circuit board may be formed on the surface of the metal article 60. In this case, the recessed portion may be internally provided with an insulating material, such as an insulating adhesive.

In the first embodiment, the loop electrode 7 is electrically directly bonded or connected to the surface of the metal article 60. Alternatively, for example, the loop electrode 7 may be bonded onto a metal foil sheet or metal plate, which may then be bonded to the metal article 60.

### Second Embodiment

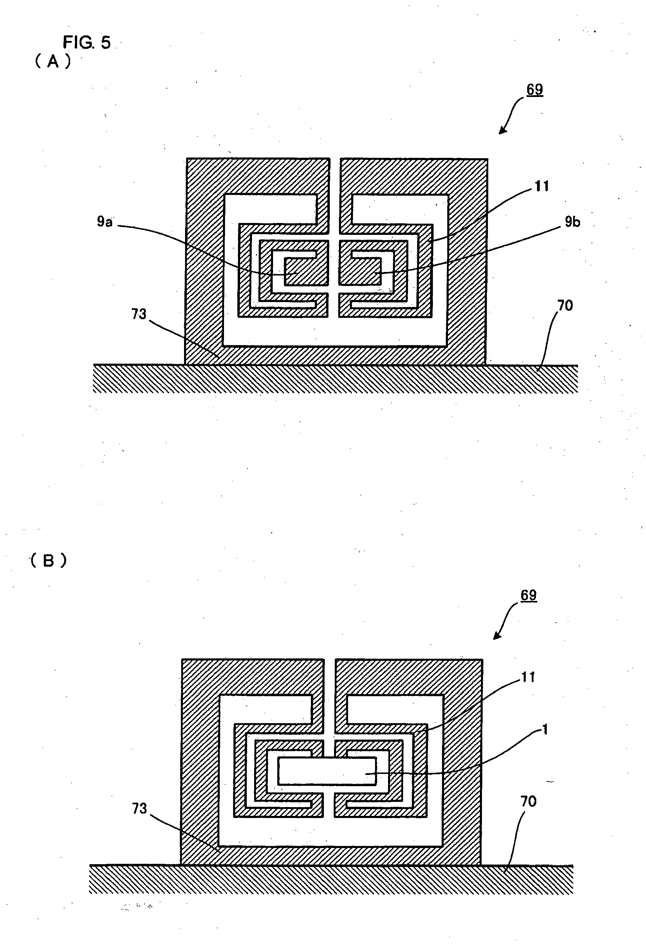

Fig. 5(A) and Fig. 5(B) illustrate configurations of two wireless IC devices according to a second embodiment of the present invention. In the second embodiment, a matching circuit is placed between a mounting area of a high-frequency device and a loop electrode. The matching circuit allows the high-frequency device and the loop electrode to be directly electrically connected to each other.

Referring to Fig. 5(A), a metal article 70 is an article at least whose surface or near-surface layer is made of metal. A loop electrode 73 is positioned such that the loop plane thereof is substantially perpendicular to the metal article 70. This allows the metal article 70 to act as a radiator.

A wireless-IC-device main part 69 is internally provided with a matching circuit 11 including a meander electrode, and metal ribbons 9a and 9b serving as a mounting area for mounting a high-frequency device (electromagnetically coupled module or wireless IC chip).

By thus providing the matching circuit 11, the wireless IC chip can be directly mounted on the metal ribbons 9a and 9b. If the wireless IC chip is directly mounted on the loop electrode, the operating frequency of the wireless IC device is substantially determined by the loop electrode including the matching circuit 11.

Fig. 5(B) illustrates a state in which the electromagnetically coupled module 1 is mounted on the metal ribbons 9a and 9b in the wireless-IC-device main part 69 illustrated in Fig. 5(A). The configuration of the matching circuit 11, metal ribbons 9a and 9b serving as a mounting area of the electromagnetically coupled module, and loop electrode 73 is the same as that illustrated in Fig. 5(A).

With this configuration, the loop electrode 73 acts as an auxiliary radiator for magnetic fields and is coupled to the metal article 70. Thus, through action similar to that illustrated in Fig. 4, the metal article 70 acts as a radiator.

The metal article 70 illustrated in Fig. 5(A) and Fig. 5(B) may be, for example, a solid electrode formed on a circuit board inside a mobile phone terminal.

### Third Embodiment

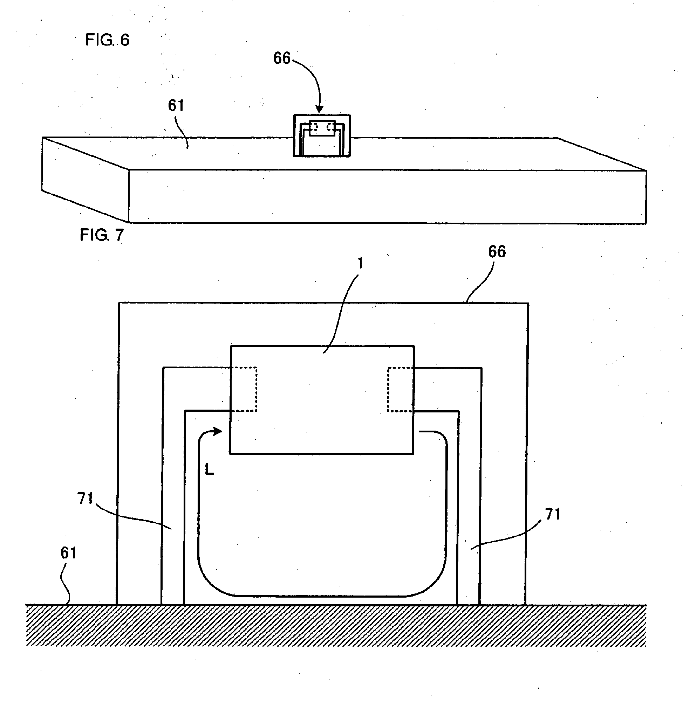

Fig. 6 is an external perspective view illustrating a wireless IC device according to a third embodiment of the present invention and a metal article provided with the wireless IC device. A metal article 61 is an article at least whose surface or near-surface layer is made of metal.

In the example illustrated in Fig. 3, the entire loop electrode is provided on the substrate of the wireless-IC-device main part 6. In the example illustrated in Fig. 6, loop electrode segments 71 that constitute part of the loop electrode are provided on a substrate of a wireless-IC-device main part 66. Then, a part of the metal article 61 serves also as a part of the loop electrode.

Fig. 7 is an enlarged view of the wireless-IC-device main part 66 illustrated in Fig. 6. The wireless-IC-device main part 66 has the substrate provided with the loop electrode segments 71 and 71 and the electromagnetically coupled module 1 coupled to the loop electrode segments 71 and 71. The configuration of the electromagnetically coupled module 1 is the same as that illustrated in Fig. 3. The loop electrode segments 71 and 71 constitute part of the loop electrode. A part of the surface of the metal article 61 serves also as a part of the loop electrode. In other words, the loop electrode segments 71 and 71 and the surface of the metal article 61 constitute the loop electrode, as indicated by L in the drawing.

With this configuration, the loop electrode constituted by the loop electrode segments 71 and 71 and the surface of the metal article 61 acts as an auxiliary radiator for magnetic fields and is coupled to the metal article 61. Thus, through action similar to that illustrated in Fig. 4, the surface of the metal article 61 acts as a radiator.

### Fourth Embodiment

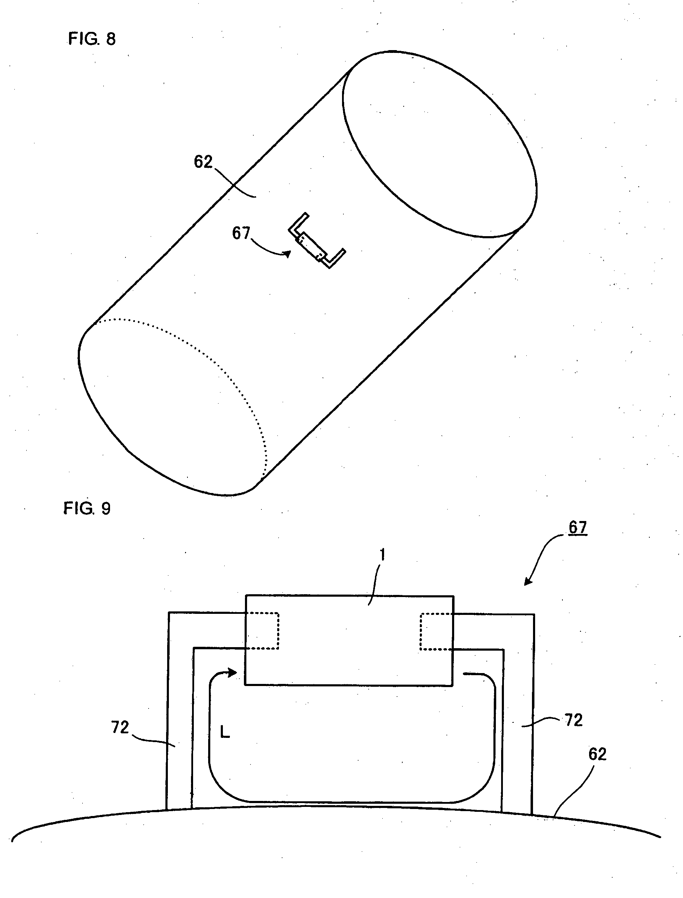

Fig. 8 is an external view of a metal article provided with a wireless IC device according to a fourth embodiment of the present invention. A metal article 62 is, for example, a cylindrical metal can. Unlike the polyhedral metal articles illustrated as examples in Fig. 2 and Fig. 6, the metal article 62 illustrated as an example in Fig. 8 has a cylindrical shape. A wireless-IC-device main part 67 is attached to the periphery of the metal article 62.

Fig. 9 is an enlarged view of a mounting area of the wireless-IC-device main part 67 illustrated in Fig. 8. The wireless-IC-device main part 67 includes loop electrode segments 72 and 72 and the electromagnetically coupled module 1 coupled to the loop electrode segments 72 and 72. Unlike the loop electrode segments 71 and 71 formed on the substrate as illustrated in Fig. 7, the loop electrode segments 72 and 72 illustrated in Fig. 9 are made of metal plates. The configuration of the electromagnetically coupled module 1 is the same as that illustrated in Fig. 3 and Fig. 7.

With this configuration, the loop electrode constituted by the loop electrode segments 72 and 72 and the surface of the metal article 62 acts as an auxiliary radiator for magnetic fields and is coupled to the metal article 62. Thus, through action similar to that illustrated in Fig. 4, the surface of the metal article 62 acts as a radiator.

When many articles are stacked, the above-described chain of induction events that occurs between electric and magnetic fields also occur among the articles, as long as a conductive part of each of the article acts as a radiator. Therefore, even if (or rather, particularly if) many articles are stacked, the wireless IC device acts as a high-gain wireless IC device. For example, in a state where an antenna of a reader/writer is placed close to a stack of soft drink cans to which the present invention is applied, IDs for all the soft drink cans in the stack can be read.

Even in the case of a paper container, if it includes a conductive layer of aluminum or the like, the conductive layer acts as a radiator.

### Fifth Embodiment

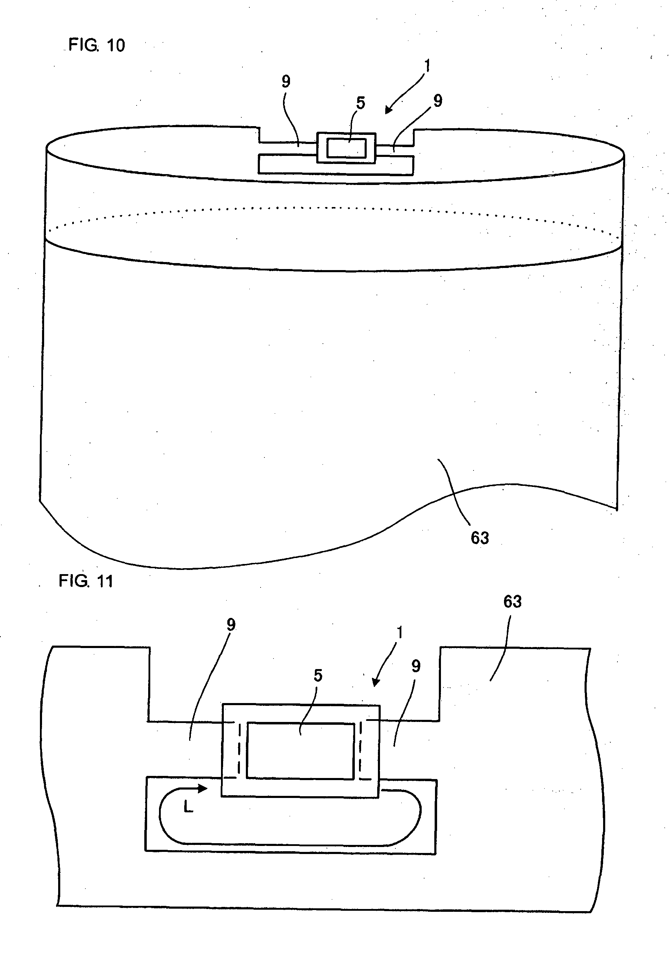

Fig. 10 is an external view of a metal article provided with a wireless IC device according to a fifth embodiment of the present invention. A metal article 63 is, for example, a cylindrical metal can. In the example illustrated in Fig. 8, the electromagnetically coupled module 1 is positioned on the periphery of the metal article 62. In the example illustrated in Fig. 10, metal ribbons 9 and 9 are provided in a part of the metal article 63, and the electromagnetically coupled module 1 is positioned on the metal ribbons 9 and 9. The electromagnetically coupled module 1 and the metal ribbons 9 and 9 may be covered with insulating material, such as plastic, or such material may be molded around the electromagnetically coupled module 1 and the metal ribbons 9 and 9.

Fig. 11 is an enlarged view of a mounting area of the electromagnetically coupled module 1 illustrated in Fig. 10. As indicated by L in the drawing, a part of the metal article 63 and the metal ribbons 9 and 9 provided in apart of the metal article 63 act as a loop electrode.

With this configuration, the metal ribbons 9 and 9 and a part of the metal article 63 act as an auxiliary radiator for magnetic fields and are coupled to the metal article 63. Thus, through action similar to that illustrated in Fig. 4, the metal article 63 acts as a radiator.

### Sixth Embodiment

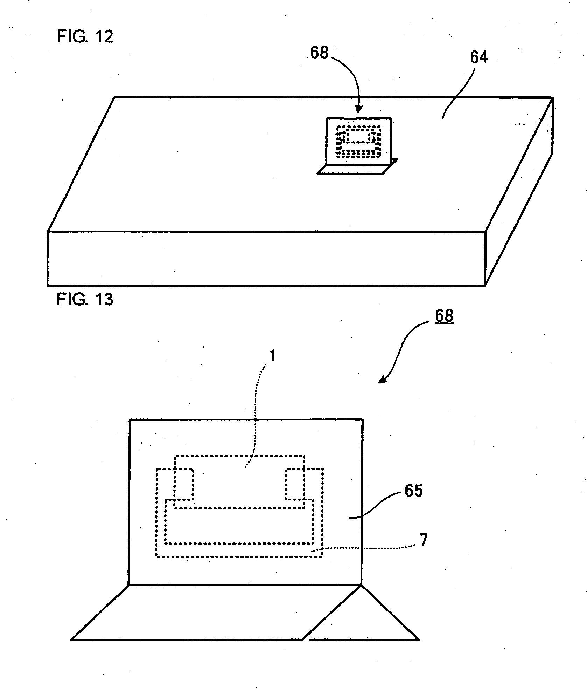

Fig. 12 is an external view of a metal article provided with a wireless IC device according to a sixth embodiment of the present invention. A metal article 64 is provided with a wireless-IC-device main part 68 on its surface.

Fig. 13 is an enlarged view of the wireless-IC-device main part 68. The overall shape of the wireless-IC-device main part 68 is a so-called "tack index label" shape. An insulating sheet 65 internally has adhesive layers, between which the loop electrode 7 and the electromagnetically coupled module 1 are interposed. The configuration of the loop electrode 7 and electromagnetically coupled module 1 is the same as that illustrated in Fig. 3.

In a manner as if a tack index label is affixed, the wireless-IC-device main part 68 is mounted on the metal article 64 such that the loop electrode 7 is perpendicular to the surface of the metal article 64 illustrated in Fig. 12.

With the configuration described above, the loop electrode 7 acts as an auxiliary radiator for magnetic fields and is coupled to the metal article 64. Thus, through action similar to that illustrated in Fig. 4, the surface of the metal article 64 acts as a radiator.

Here, a loop along the metal article acts as the loop electrode 7. Alternatively, as described in the foregoing embodiments, the metal article 64 may be configured to act both as a part of the loop electrode and a radiator.

### Seventh Embodiment

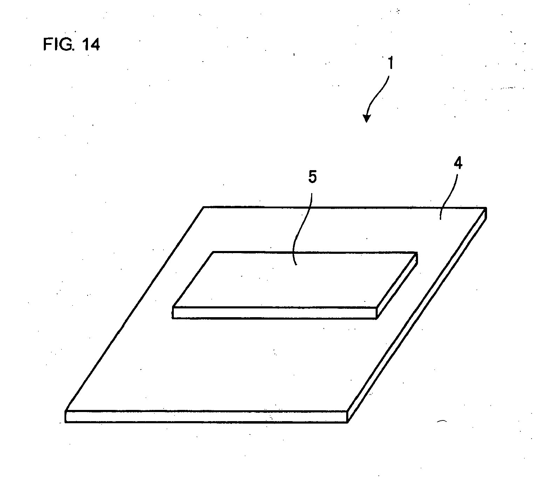

Fig. 14 is an external perspective view of the electromagnetically coupled module 1 for a wireless IC device according to a seventh embodiment of the present invention. The electromagnetically coupled module 1 is applicable to the wireless IC device of any of the other embodiments. The electromagnetically coupled module 1 includes a wireless IC chip 5 and a feed circuit board 4. The feed circuit board 4 not only provides an impedance match between the wireless IC chip 5 and a metal article acting as a radiator, but also acts as a resonant circuit.

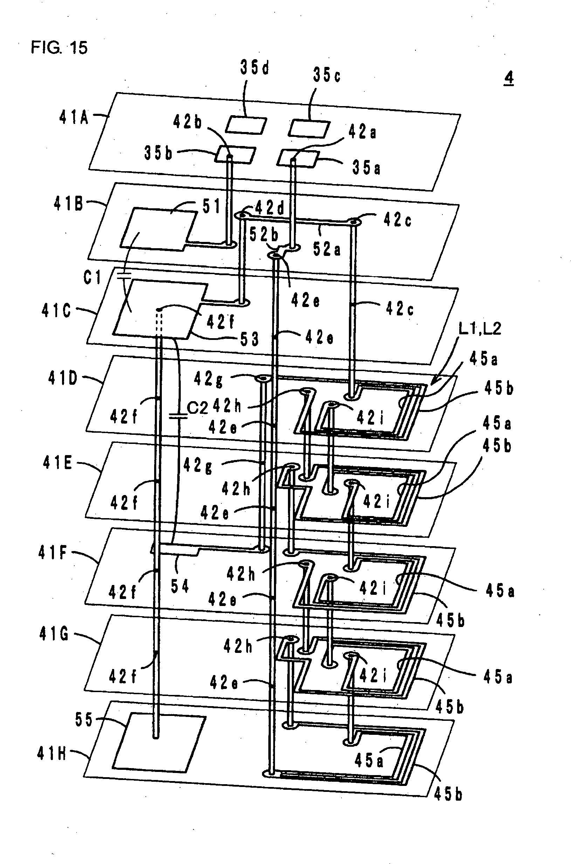

Fig. 15 is an exploded view illustrating an internal configuration of the feed circuit board 4. The feed circuit board 4 is a multilayer substrate formed by stacking a plurality of dielectric layers each having an electrode pattern. A dielectric layer 41A at the top has wireless-IC-chip mounting lands 35a to 35d. A dielectric layer 41B has a capacitor electrode 51 electrically connected to the wireless-IC-chip mounting land 35b. A dielectric layer 41C has a capacitor electrode 53. A capacitor C1 is formed between the capacitor electrode 51 and the capacitor electrode 53. Dielectric layers 41D to 41H each have inductor electrodes 45a and 45b. The inductor electrodes 45a and 45b on a plurality of different layers form inductors L1 and L2 that are double-spiral in overall shape and are strongly dielectrically coupled to each other. The dielectric layer 41F has a capacitor electrode 54 electrically connected to the inductor L1. The capacitor electrode 54 is interposed between the capacitor electrode 53 and a capacitor electrode 55, and forms the capacitor electrode 55. Electrodes of adjacent dielectric layers are electrically connected to each other through corresponding via holes 42a to 42i.

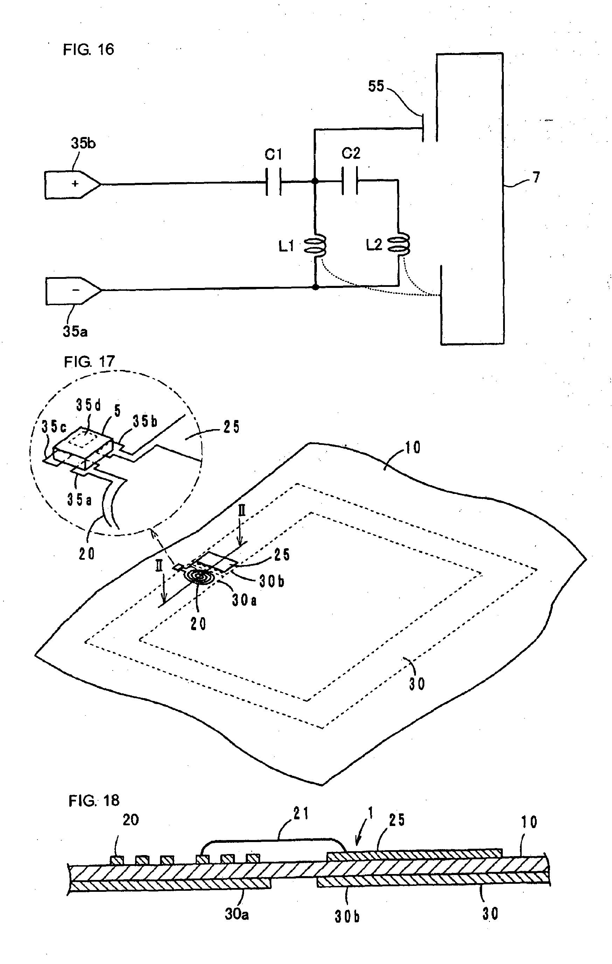

Fig. 16 is an equivalent circuit diagram illustrating the feed circuit board 4 of Fig. 15 and the loop electrode. Referring to Fig. 16, the capacitor C1 corresponds to a capacitance formed between the capacitor electrodes 51 and 53 illustrated in Fig. 15; the capacitor C2 corresponds to a capacitance formed between the capacitor electrodes 54 and 53 and the capacitor electrode 55 illustrated in Fig. 15; and the inductors L1 and L2 correspond to the inductor electrodes 45a and 45b illustrated in Fig. 15.

The capacitor electrode 55 is parallel to and opposite an end of the loop electrode (i.e., the loop electrode 7 in the example of Fig. 3). The capacitor electrode 55 forms a capacitance between itself and this end of the loop electrode 7. The inductor electrodes L1 and L2 are electromagnetically coupled to the other end of the loop electrode 7.

In the feed circuit board 4, a resonance frequency is determined by a resonant circuit formed by the inductance elements L1 and L2 and their stray capacitance. The frequency of a signal emitted from a radiation electrode is substantially determined by the self-resonant frequency of the resonant circuit.

The electromagnetically coupled module 1 formed by mounting the wireless IC chip 5 on the feed circuit board 4 receives, through the radiation electrode, high-frequency signals (e.g., in the UHF frequency band) emitted from a reader/writer (not shown), causes the resonant circuit in the feed circuit board 4 to resonate, and supplies received signals only in a predetermined frequency band to the wireless IC chip 5. At the same time, the electromagnetically coupled module 1 extracts predetermined energy from the received signals, uses the extracted energy as a drive source to match information stored in the wireless IC chip 5 to a predetermined frequency in the resonant circuit, and transmits the information to the radiation electrode, from which the information is transmitted (transferred) to the reader/writer.

Thus, providing a resonant circuit in the feed circuit board improves frequency selectivity and allows an operating frequency of the wireless IC device to be substantially determined by the self-resonant frequency. Accordingly, transmission and reception of energy of signals having a frequency used in the RFID system can be performed with a high degree of efficiency. At the same time, it is possible to set an optimum resonance frequency for the shape and size of the radiator, and thus to improve the radiation characteristics of the wireless IC device.

### Eighth Embodiment

Fig. 17 illustrates a configuration of an electromagnetically coupled module for a wireless IC device according to an eighth embodiment of the present invention. Referring to Fig. 17, a loop electrode 30 is formed on an inner layer of a base 10. An insulating layer is disposed over two open ends 30a and 30b of the loop electrode 30, and an inductor electrode 20 and a capacitor electrode 25 are disposed over the insulating layer. The inductor electrode 20 has a spiral shape and its inner end is connected to the capacitor electrode 25 as described below.

As illustrated in an enlarged view in Fig. 17, the wireless IC chip 5 is mounted on the ends of the inductor electrode 20 and capacitor electrode 25. Specifically, the wireless-IC-chip mounting land 35a is formed at the end of the inductor electrode 20, the wireless-IC-chip mounting land 35b is formed at the end of the capacitor electrode 25, and the wireless-IC-chip mounting lands 35c and 35d are formed additionally. Then, the wireless IC chip 5 is mounted on the wireless-IC-chip mounting lands 35a to 35d.

Fig. 18 is a cross-sectional view taken along line II-II of Fig. 17. Referring to Fig. 18, a wire 21 connects the inductor electrode 20 and the capacitor electrode 25.

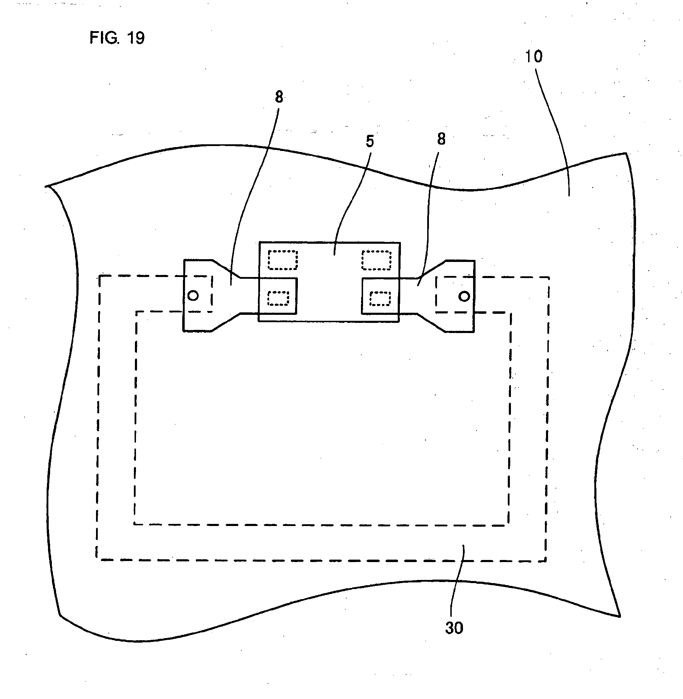

As illustrated in Fig. 19, as a modification of the eighth embodiment, the wireless IC chip 5 and the loop electrode 30 may be electrically connected through impedance matching units 8 and 8.

The impedance matching units 8 and 8 may be separately produced using a ceramic multilayer substrate, a glass epoxy substrate, or the like and attached to the loop electrode 30 by a conductive adhesive. Thus, the impedance matching units 8 and 8 allow electrical connection between the wireless IC chip 5 and the loop electrode 30.

### Ninth Embodiment

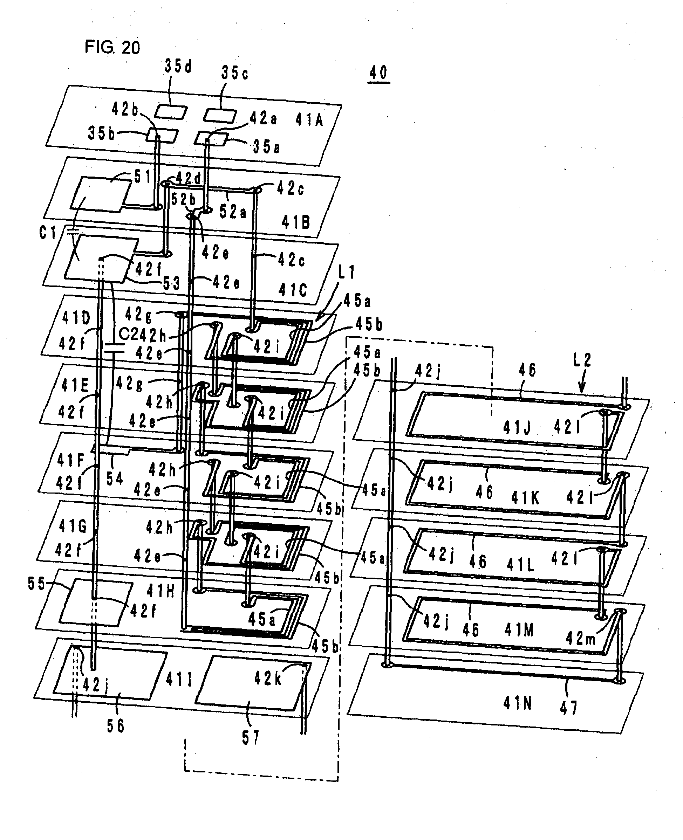

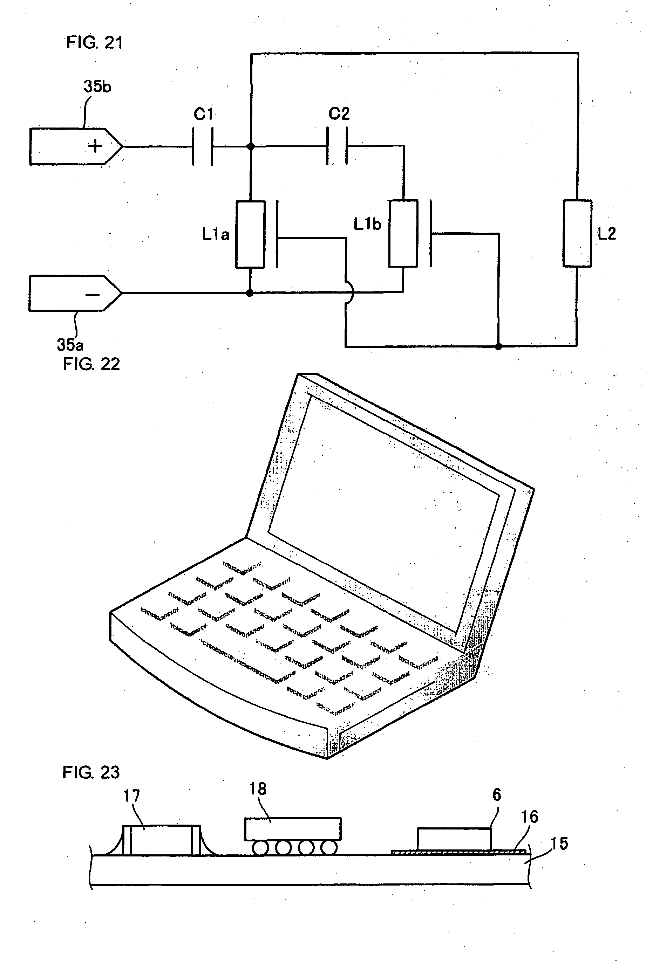

Fig. 20 is an exploded perspective view illustrating a feed circuit board 40 in a wireless IC device according to a ninth embodiment of the present invention. Fig. 21 is an equivalent circuit diagram of Fig. 20.

The feed circuit board 40 is a multilayer substrate formed by stacking a plurality of dielectric layers each having an electrode pattern. The dielectric layer 41A at the top has the wireless-IC-chip mounting lands 35a to 35d. The dielectric layer 41B has the capacitor electrode 51 electrically connected to the wireless-IC-chip mounting land 35b. The dielectric layer 41C has the capacitor electrode 53. The capacitor C1 is formed between the capacitor electrode 51 and the capacitor electrode 53. The dielectric layers 41D to 41H each have the inductor electrodes 45a and 45b. The inductor electrodes 45a and 45b form the inductor L1 that is double-spiral in overall shape.

The dielectric layer 41F has the capacitor electrode 54 electrically connected to the inductor L1. The capacitor electrode 54 is interposed between the capacitor electrodes 53 and 55 (56), and forms a capacitor. The dielectric layer 41H has the capacitor electrode 55 electrically connected to the capacitor electrode 53.

Dielectric layers 41J to 41N each have inductor electrodes 46 and 47. The inductor electrodes 46 and 47 form the loop electrode L2 winding multiple times. Electrodes of adjacent dielectric layers are electrically connected to each other through corresponding via holes 42a to 42m.

That is, the feed circuit board 40 is obtained by adding a loop electrode to the feed circuit board 4 illustrated in Fig. 15.

Referring to Fig. 21, the capacitor C1 corresponds to a capacitance formed between the capacitor electrodes 51 and 53 illustrated in Fig. 20; the capacitor C2 corresponds to a capacitance formed between the capacitor electrodes 54 and 53 and the capacitor electrode 55 illustrated in Fig. 20; inductors L1a and L1b correspond to the inductor electrodes 45a and 45b illustrated in Fig. 20; and the inductor L2 corresponds to the inductor electrodes 46 and 47 illustrated in Fig. 20.

### Tenth Embodiment

Fig. 22 is an external perspective view of a notebook personal computer provided with a wireless IC device. Fig. 23 is a cross-sectional view illustrating a main part of a circuit board inside the notebook personal computer. Electronic components 17 and 18 and the wireless-IC-device main part 6 are mounted on a circuit board 15 inside the notebook personal computer in a direction substantially perpendicular to the circuit board 15. An electrode pattern 16 is formed on an upper surface of the circuit board 15. The electrode pattern 16 is coupled to the wireless-IC-device main part 6 and acts as a radiator.

As another example, a wireless IC device may be formed on a metal panel on the back of a component (e.g., liquid crystal panel) inside the notebook personal computer illustrated in Fig. 22. That is, the wireless IC device according to any of the first to tenth embodiments may be applied to cause the metal panel to act as a radiator.

The same is applicable to any metal articles (e.g., a safe and a container) in addition to those described in the foregoing embodiments.

### Eleventh Embodiment

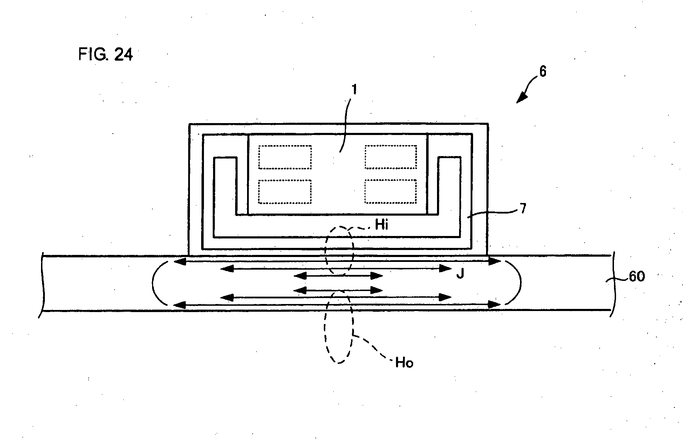

Fig. 24 is a cross-sectional view illustrating a main part of a wireless IC device according to an eleventh embodiment of the present invention.

In the example described in the first embodiment with reference to Fig. 2, the wireless-IC-device main part 6 is mounted on the surface (i.e., electromagnetic wave transmission/reception surface outside the metal article 60) for receiving signals from the reader/writer. In the eleventh embodiment, the wireless-IC-device main part 6 is mounted on a surface opposite the surface for receiving signals from the reader/writer.

As in the case of the first embodiment, the wireless-IC-device main part 6 has an insulating substrate, which is provided with the loop electrode 7 and the electromagnetically coupled module 1 coupled to the loop electrode 7.

With this configuration, a signal (magnetic field Ho) from the reader/writer causes an eddy current J to flow across the conductor principal plane of the metal article 60. The eddy current J causes a magnetic field Hi to be generated in a direction perpendicular to the conductor principal plane of the metal article 60. Then, the loop electrode 7 is coupled to the magnetic field Hi. Thus, the wireless-IC-device main part 6 functions as an RFID tag even for signals from the principal plane opposite the wireless-IC-device main part 6.

An article on which the wireless-IC-device main part 6 is mounted is not limited to a metal article, but may be any article having a surface made of conductive material, such as carbon.

The loop electrode 7 may either be in contact with or separated from the conductive surface of the article.

### Twelfth Embodiment

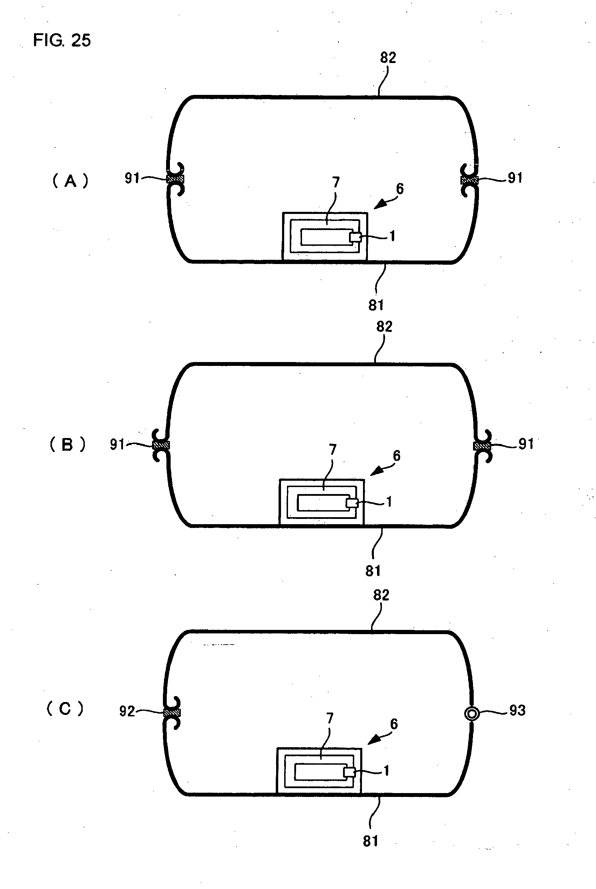

Fig. 25(A) to Fig. 25(C) are cross-sectional views illustrating a main part of a wireless IC device according to a twelfth embodiment of the present invention.

In the example described in the first embodiment with reference to Fig. 2, the wireless-IC-device main part 6 is mounted on the surface (i.e., outer surface) of the metal article 60. However, in the twelfth embodiment, the wireless-IC-device main part 6 is mounted inside (i.e., on the inner surface) of the metal article 60.

Fig. 25(A) illustrates metal cases (half cases) 81 and 82 having joining parts protruding inside the cases. Fig. 25(B) illustrates the metal cases (half cases) 81 and 82 having joining parts protruding outside the cases. Fig. 25(C) illustrates the metal cases (half cases) 81 and 82 having a hinge mechanism for maintaining conductivity at one end. In every case, corresponding joining parts are joined to each other with an electrical insulator (e.g., rubber packing) or an electrical resistor interposed therebetween.

As in the case of the first embodiment, the wireless-IC-device main part 6 has an insulating substrate, which is provided with the loop electrode 7 and the electromagnetically coupled module 1 coupled to the loop electrode 7.

With this configuration, as in the case of the eleventh embodiment, a signal (magnetic field) from the reader/writer causes an eddy current to flow across the conductor principal plane of the metal cases 81 and 82. The eddy current causes a magnetic field to be generated in a direction perpendicular to the conductor principal plane of the metal cases 81 and 82. Then, the magnetic field is coupled to the loop electrode 7. This allows the metal cases 81 and 82 to be used as metal articles having an internal RFID tag.

In the examples illustrated in Fig. 25(A) and Fig. 25(B), the upper metal case 82 is galvanically isolated from the metal case 81 in which the wireless-IC-device main part 6 is provided. However, since a chain of electric field loops and magnetic field loops spreads along the conductor plane of the metal cases, the upper metal case 82 also acts as a radiator.

Thus, by providing the wireless IC device 6 inside a case, the durability and environmental resistance of the wireless IC device are improved.

The same applies to the situation where the wireless-IC-device main part 6 illustrated in Fig. 25(A) to Fig. 25(C) is, for example, an RFID tag for a food product and the metal cases 81 and 82 correspond to a housing of a refrigerator or freezer. Here, it is possible to externally read information about each food product without opening the door of the refrigerator or freezer.

The same also applies to the situation where the wireless-IC-device main part 6 illustrated in Fig. 25(A) to Fig. 25(C) is, for example, an RFID tag for an electronic component or circuit board and the metal cases 81 and 82 correspond to a housing of a personal computer or mobile phone terminal. Here, it is possible to externally read information about each electronic component or circuit board without opening the housing of the personal computer or mobile phone terminal.

Although Fig. 25(A) to Fig. 25(C) illustrate can-shaped metal cases as examples, the same also applies to tubular or cup-shaped conductive cases. For example, by providing the wireless-IC-device main part 6 inside a carbon shaft of a golf club, the golf club can be used as a golf club having an internal RFID tag that is externally readable and writable.

### Thirteenth Embodiment (not being part of the claimed invention)

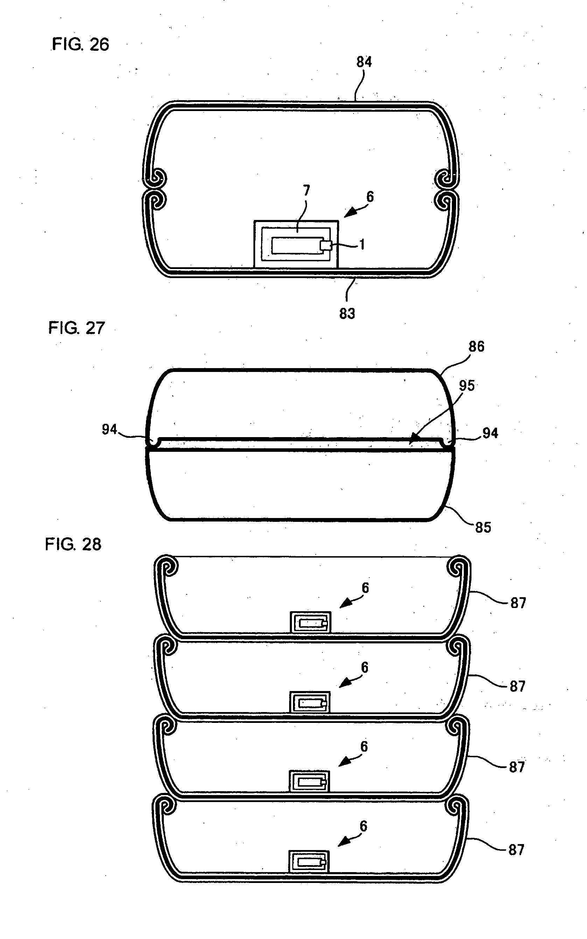

Fig. 26 is a cross-sectional view illustrating a main part of a wireless IC device according to a thirteenth embodiment.

In the example of Fig. 26, metal cases 83 and 84 that are surface-coated with electrical insulating material or electrical resistive material are used. The other configuration is the same as that illustrated in Fig. 25(A) to Fig. 25(C).

Thus, an interface between the upper and lower cases may be insulated or substantially insulated by the coating over the case surface.

### Fourteenth Embodiment

Fig. 27 is a cross-sectional view illustrating a main part of a wireless IC device according to a fourteenth embodiment of the present invention.

In the example of Fig. 27, protrusions 94 at joining parts between a lower metal case 85 and an upper metal case 86 create a clearance 95. The other configuration is the same as that illustrated in Fig. 25(A) to Fig. 25(C).

Thus, even if there is a clearance in metal cases, the metal article can be used as an article having an internal RFID tag, through action similar to that described above.

### Fifteenth Embodiment (not being part of the claimed invention)

Fig. 28 is a cross-sectional view illustrating a main part of a wireless IC device according to a fifteenth embodiment.

In the example of Fig. 28, the wireless-IC-device main part 6 is mounted inside a metal tray 87 to form a metal tray having an RFID tag. The metal tray 87 is surface-coated with electrical insulating material or electrical resistive material. In the example of Fig. 28, a plurality of metal trays are stacked on top of each other.

By stacking the metal trays as described above, the metal trays are galvanically isolated from each other by the coating of the electrical insulating material or electrical resistive material, and each wireless-IC-device main part 6 is surrounded by metal material. However, as in the cases of the twelfth to fourteenth embodiments described above, the reader/writer can communicate with an RFID tag in each metal tray.

### Sixteenth Embodiment

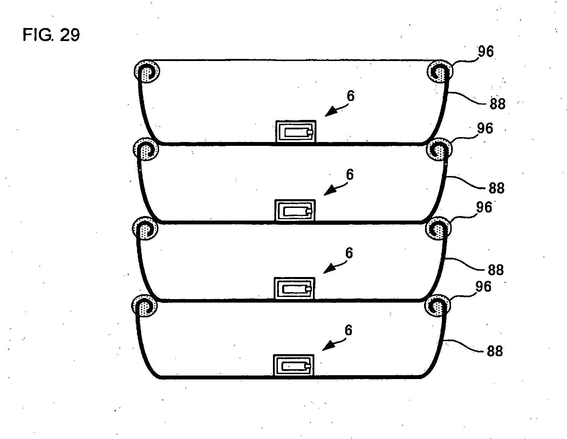

Fig. 29 is a cross-sectional view illustrating a main part of a wireless IC device according to a sixteenth embodiment of the present invention.

In the example of Fig. 29, the wireless-IC-device main part 6 is mounted inside a metal tray 88 to form a metal tray having an RFID tag. The metal tray 88 has a rim 96 of electrical insulating material or electrical resistive material at its edge. In the example of Fig. 29, a plurality of metal trays are stacked on top of each other.

By stacking the metal trays as described above, the metal trays are galvanically isolated from each other by the electrical insulating material or electrical resistive material, and each wireless-IC-device main part 6 is surrounded by metal material. However, as in the cases of the twelfth to fourteenth embodiments described above, the reader/writer can individually communicate with an RFID tag in each metal tray.

In the examples described with reference to Fig. 25 to Fig. 29, there are portions galvanically isolated by the electrical insulating or resistive material. However, the wireless-IC-device main part 6 provided inside a case or housing tightly surrounded by conductive material can still be used as an RFID tag while the antenna gain may be slightly reduced.

A loop electrode of rectangular shape is used in the embodiments described above. However, the loop electrode may be of any shape, such as circular, elliptical, or polygonal shape, depending on the article in which the electrode is contained. Additionally, the loop electrode may extend from the bottom to the side of a case. Even when the shape of the signal transmission/reception surface is thus modified, the wireless-IC-device main part 6 still functions as an RFID tag.

Also, in the embodiments described above, a loop electrode is formed of a single-layer conductive pattern. However, the loop electrode may have a multilayer coil structure, instead of a single-layer loop structure.

A loop electrode forms an open loop in the embodiments described above. However, the loop electrode may form a closed loop, as long as the loop electrode is configured to be magnetically coupled to an inductor in a feed circuit board. That is, an inductor pattern parallel to the loop plane of the loop electrode may be formed on the feed circuit board such that the inductor pattern is magnetically coupled to the loop electrode forming a closed loop.

Also, in the embodiments described above, a wireless-IC-device main part having a loop electrode is mounted on a principal surface of a case, the principal surface having a large area. However, the wireless-IC-device main part may be mounted on a side of the case.

## Claims

1. A wireless IC device comprising:
a high-frequency device including an IC chip;
a loop electrode (7; 30; 71, 72, 73) electrically connected to or electromagnetically coupled to the high-frequency device; and
a radiation electrode formed by a surface (60) of a metal article,
wherein the loop electrode (7; 30; 71, 72, 73) is configured to be coupled to the radiation electrode with its loop plane perpendicular or inclined to a plane of the radiation electrode,
**characterized in that**
the loop electrode (7; 30; 71, 72, 73) is electrically directly connected to the radiation electrode;
the high-frequency device is a UHF high-frequency device; and
the loop electrode (7; 30; 71, 72, 73) is adapted to cause magnetic field loops to be generated parallel to the surface (60) of the metal article, and is adapted to induce electric fields in a direction substantially perpendicular to the surface of the metal article, and electric field loops adapted to induce further magnetic field loops.

2. The wireless IC device according to claim 1, wherein the loop electrode (71, 72) is constituted by loop electrode segments (71, 72) and a part of the radiation electrode.

3. The wireless IC device according to claim 1 or 2, further comprising a matching circuit (11) between a mounting area of the UHF high-frequency device and the loop electrode (7; 30; 71, 72, 73), the matching circuit (11) being configured to directly electrically connect the UHF high-frequency device to the loop electrode (7; 30; 71, 72, 73).

4. The wireless IC device according to any one of claims 1 to 3, further comprising a resonant circuit and/or a matching circuit (11) in the feed circuit board (4; 40).

5. The wireless IC device according to claim 4, wherein a resonance frequency of the resonant circuit is substantially equal to a frequency of a signal transmitted and received by the radiation electrode.

6. The wireless IC device according to any one of claims 1 to 5, wherein the UHF high-frequency device or the loop electrode (7; 30; 71, 72, 73) is covered with plastic.

7. The wireless IC device according to any one of claims 1 to 5, wherein the UHF high-frequency device and the loop electrode (7; 30; 71, 72, 73) are molded of plastic on the radiation electrode.

8. The wireless IC device according to claim 1, wherein the UHF high-frequency device is an electromagnetically coupled module.

9. The wireless IC device according to claim 8, wherein the electromagnetically coupled module includes a wireless IC chip and a feed circuit board (4; 40).

10. The wireless IC device according to claim 9, wherein the feed circuit board is coupled to the loop electrode, and the feed circuit board is electrically connected to or electromagnetically coupled to the wireless IC chip.

11. A cylindrical metal article, comprising a conductive layer, the cylindrical metal article being the radiation electrode, and a wireless IC device according to any one of claims 1 to 9.

12. An electronic equipment, comprising a circuit board (15) inside the electronic equipment, the circuit board (15) having an electrode pattern (16) formed thereon to define the radiation electrode, and a wireless IC device according to any one of claims 1 to 9.

13. An electronic equipment, comprising a metal plate defining the radiation electrode in a component inside the electronic equipment, and a wireless IC device according to any one of claims 1 to 9.

14. An article, comprising the radiation electrode, a surface opposite an electromagnetic wave transmission/reception surface, and a wireless IC device according to any one of claims 1 to 9, wherein the loop electrode (7; 30; 71, 72, 73) is disposed on a surface opposite the electromagnetic wave transmission/reception surface outside the radiation electrode.

## Patentansprüche

1. Ein drahtloses IC-Bauelement, das folgende Merkmale aufweist:
ein Hochfrequenzbauelement, das einen IC-Chip umfasst;
eine Schleifenelektrode (7; 30; 71, 72, 73), die mit dem Hochfrequenzbauelement elektrisch verbunden oder elektromagnetisch gekoppelt ist; und
eine Strahlungselektrode, die durch eine Oberfläche (60) eines Metallartikels gebildet ist,
wobei die Schleifenelektrode (7; 30; 71, 72, 73) konfiguriert ist, um mit der Strahlungselektrode gekoppelt zu sein, mit der Schleifenebene derselben senkrecht oder geneigt zu einer Ebene der Strahlungselektrode,
**dadurch gekennzeichnet, dass**
die Schleifenelektrode (7; 30; 71, 72, 73) elektrisch direkt mit der Strahlungselektrode verbunden ist;
das Hochfrequenzbauelement ein UHF-Hochfrequenzbauelement ist; und
die Schleifenelektrode (7; 30; 71, 72, 73) angepasst ist, um zu bewirken, dass Magnetfeldschleifen parallel zu der Oberfläche (60) des Metallartikels erzeugt werden, und angepasst ist, um elektrische Felder zu induzieren in einer Richtung im Wesentlichen senkrecht zu der Oberfläche des Metallartikels, und elektrische Feldschleifen, die angepasst sind, um weitere Magnetfeldschleifen zu induzieren.

2. Das drahtlose IC-Bauelement gemäß Anspruch 1, bei dem die Schleifenelektrode (71, 72) durch Schleifenelektrodensegmente (71, 72) und einen Teil der Strahlungselektrode gebildet ist.

3. Das drahtlose IC-Bauelement gemäß Anspruch 1 oder 2, das ferner eine Anpassungsschaltung (11) zwischen einem Befestigungsbereich des UHF-Hochfrequenzbauelements und der Schleifenelektrode (7; 30; 71, 72, 73) aufweist, wobei die Anpassungsschaltung (11) konfiguriert ist, um das UHF-Hochfrequenzbauelement direkt elektrisch mit der Schleifenelektrode (7; 30; 71, 72, 73) zu verbinden.

4. Das drahtlose IC-Bauelement gemäß einem der Ansprüche 1 bis 3, das ferner eine Resonanzschaltung und/oder eine Anpassungsschaltung (11) in der Speiseschaltungsplatine (4; 40) aufweist.

5. Das drahtlose IC-Bauelement gemäß Anspruch 4, bei dem eine Resonanzfrequenz der Resonanzschaltung im Wesentlichen gleich einer Frequenz eines Signals ist, das durch die Strahlungselektrode gesendet und empfangen wird.

6. Das drahtlose IC-Bauelement gemäß einem der Ansprüche 1 bis 5, bei dem das UHF-Hochfrequenzbauelement oder die Schleifenelektrode (7; 30; 71, 72, 73) mit Kunststoff bedeckt ist.

7. Das drahtlose IC-Bauelement gemäß einem der Ansprüche 1 bis 5, bei dem das UHF-Hochfrequenzbauelement und die Schleifenelektrode (7; 30; 71, 72, 73) auf der Strahlungselektrode aus Kunststoff geformt sind.

8. Das drahtlose IC-Bauelement gemäß Anspruch 1, bei dem das UHF-Hochfrequenzbauelement ein elektromagnetisch gekoppeltes Modul ist.

9. Das drahtlose IC-Bauelement gemäß Anspruch 8, bei dem das elektromagnetisch gekoppelte Modul einen drahtlosen IC-Chip und eine Speiseschaltungsplatine (4; 40) umfasst.

10. Das drahtlose IC-Bauelement gemäß Anspruch 9, bei dem Speiseschaltungsplatine mit der Schleifenelektrode gekoppelt ist, und die Speiseschaltungsplatine mit dem drahtlosen IC-Chip elektrisch verbunden oder elektromagnetisch gekoppelt ist.

11. Ein zylindrischer Metallartikel, der eine leitfähige Schicht aufweist, wobei der zylindrische Metallartikel die Strahlungselektrode ist, und ein drahtloses IC-Bauelement gemäß einem der Ansprüche 1 bis 9.

12. Eine Elektronikausrüstung, die eine Schaltungsplatine (15) in der elektronischen Ausrüstung aufweist, wobei auf der Schaltungsplatine (15) eine Elektrodenstruktur (16) gebildet ist, um die Strahlungselektrode zu definieren, und ein drahtloses IC-Bauelement gemäß einem der Ansprüche 1 bis 9.

13. Eine Elektronikausrüstung, die eine Metallplatte aufweist, die die Strahlungselektrode in einer Komponente in der Elektronikausrüstung definiert, und ein drahtloses IC-Bauelement gemäß einem der Ansprüche 1 bis 9.

14. Ein Artikel, der die Strahlungselektrode aufweist, eine Oberfläche gegenüber einer Elektromagnetische-Welle-Sende/Empfangsoberfläche, und ein drahtloses IC-Bauelement gemäß einem der Ansprüche 1 bis 9, wobei die Schleifenelektrode (7; 30; 71, 72, 73) auf einer Oberfläche gegenüber der Elektromagnetische-Welle-Sende/Empfangsoberfläche außerhalb der Strahlungselektrode angeordnet ist.

## Revendications

1. Dispositif CI sans fil comportant :
un dispositif haute fréquence comprenant une puce CI ;
une électrode en boucle (7 ; 30 ; 71, 72, 73) reliée électriquement à ou couplée électromagnétiquement au dispositif haute fréquence ; et
une électrode de rayonnement formée par une surface (60) d'un article métallique,
dans lequel l'électrode en boucle (7 ; 30 ; 71, 72, 73) est configurée pour être couplée à l'électrode de rayonnement avec son plan de boucle perpendiculaire ou incliné par rapport à un plan de l'électrode de rayonnement,
**caractérisé en ce que**
l'électrode en boucle (7 ; 30 ; 71, 72, 73) est directement reliée électriquement à l'électrode de rayonnement ;
le dispositif haute fréquence est un dispositif haute fréquence UHF ; et
l'électrode en boucle (7 ; 30 ; 71, 72, 73) est adaptée pour amener des boucles de champ électrique à être générées parallèlement à la surface (60) de l'article métallique, et est adaptée pour induire des champs électriques dans une direction sensiblement perpendiculaire à la surface de l'article métallique, et des boucles de champ électrique adaptées pour induire d'autres boucles de champ magnétique.

2. Dispositif CI sans fil selon la revendication 1, dans lequel l'électrode en boucle (71, 72) est constituée par des segments d'électrode en boucle (71, 72) et une partie de l'électrode de rayonnement.

3. Dispositif CI sans fil selon la revendication 1 ou 2, comportant en outre un circuit d'adaptation (11) entre une zone de montage du dispositif haute fréquence UHF et l'électrode en boucle (7 ; 30 ; 71, 72 73), le circuit d'adaptation (11) étant configuré pour relier directement électriquement le dispositif haute fréquence UHF à l'électrode en boucle (7 ; 30 ; 71, 72, 73).

4. Dispositif CI selon l'une quelconque des revendications 1 à 3, comportant en outre un circuit résonnant et/ou un circuit d'adaptation (11) dans la carte de circuit d'alimentation (4 ; 40).

5. Dispositif CI sans fil selon la revendication 4, dans lequel une fréquence de résonance du circuit résonnant est sensiblement égale à une fréquence d'un signal transmis et reçu par l'électrode de rayonnement.

6. Dispositif CI sans fil selon l'une quelconque des revendications 1 à 5, dans lequel le dispositif haute fréquence UHF ou l'électrode en boucle (7 ; 30 ; 71, 72, 73) est recouvert de plastique.

7. Dispositif CI sans fil selon l'une quelconque des revendications 1 à 5, dans lequel le dispositif haute fréquence UHF et l'électrode en boucle (7 ; 30 ; 71, 72 73) sont en plastique moulé sur l'électrode de rayonnement.

8. Dispositif CI sans fil selon la revendication 1, dans lequel le dispositif haute fréquence UHF est un module électromagnétiquement couplé.

9. Dispositif CI sans fil selon la revendication 8, dans lequel le module électromagnétiquement couplé comprend une puce CI sans fil et une carte de circuit d'alimentation (4 ; 40).

10. Dispositif CI sans fil selon la revendication 9, dans lequel la carte de circuit d'alimentation est couplée à l'électrode en boucle, et la carte de circuit d'alimentation est électriquement reliée à ou électromagnétiquement couplée à la puce CI sans fil.

11. Article métallique cylindrique, comportant une couche conductrice, l'article métallique cylindrique étant l'électrode de rayonnement, et un dispositif CI sans fil selon l'une quelconque des revendications 1 à 9.

12. Équipement électronique, comportant une carte de circuit (15) à l'intérieur de l'équipement électronique, la carte de circuit (15) possédant un motif d'électrode (16) formé à sa surface pour définir l'électrode de rayonnement, et un dispositif CI sans fil selon l'une quelconque des revendications 1 à 9.

13. Équipement électronique, comportant une plaque métallique définissant l'électrode de rayonnement dans un composant à l'intérieur de l'équipement électronique, et un dispositif CI sans fil selon l'une quelconque des revendications 1 à 9.

14. Article, comportant l'électrode de rayonnement, une surface opposée à une surface de transmission/réception d'ondes électromagnétiques, et un dispositif CI sans fil selon l'une quelconque des revendications 1 à 9, dans lequel l'électrode en boucle (7 ; 30 ; 71, 72, 73) est disposée sur une surface opposée à la surface de transmission/réception d'ondes électromagnétiques à l'extérieur de l'électrode de rayonnement.
